# EUROPEAN PATENT SPECIFICATION

(11) **EP 0 886 931 B1**
(45) Date of publication and mention of the grant of the patent: **11.06.2003**
(21) Application number: 97914714.7
(22) Date of filing: 17.03.1997
(51) Int. Cl.: H04L 12/24, H04Q 3/00

(54) **METHOD AND ARRANGEMENT RELATING TO THE INSTALLATION OF A NEW SUBSCRIBER IN A TELECOMUNICATIONS NETWORK**
VERFAHREN UND ANORDNUNG BEZÜGLICH DER EINRICHTUNG EINES NEUEN TEILNEHMERS IN EINEM FERNMELDENETZ
PROCEDE ET CONFIGURATION CONCERNANT L'INSTALLATION D'UN NOUVEL ABONNE DANS UN RESEAU DE TELECOMMUNICATIONS

(30) Priority: 19.03.1996 SE 9601047
(43) Date of publication of application: 30.12.1998
(73) Proprietor: TELEFONAKTIEBOLAGET LM ERICSSON, 126 25 Stockholm (SE)
(72) Inventor: HASTER, Lars-Olof, S-141 31 Huddinge (SE)
(74) Representative: Forssell, Gunilla
(86) International application number: SE9700446
(87) International publication number: WO97035404

(56) References cited:
- FREQUENZ, Volume 48, No. 1-2, 1994, (Berlin, Germany), K. KHAKZAR, "V5 Interfaces Between Digital Local Exchanges and Access Networks", pages 44-50.
- IEEE GLOBAL TELECOMMUNICATIONS CONFERENCE, Volume 3, December 1992, (USA), A. GILLESPIE, "Interfacing Access Networks to Exchanges - The ETSI V5 Approach", pages 1754-1758.

## Description

### FIELD OF INVENTION

The present invention relates to a method and an arrangement to establish telecommunications opportunities between an Access Network (AN) and a Local Exchange (LE) regarding a new subscriber to be connected to the Access Network.

### STATE OF THE ART

The European Telecommunications Standard Institute (ETSI) has produced standards of type V, the V5.1 and V5.2 interfaces (ETS 300 324-1 and ETS 300 347-1), as an interface between two systems, an Access Network (AN) and a Local Exchange (LE), with flexible (provisioned) information channel (bearer channel) allocation. Supported access types in the V5 interface standard are ISDN-BA and PSTN services. ISDN-BA are provided for digital communication and PSTN for speach communication. Both the AN and the LE are connected to the likewise standardized management Q3 interface, which supplies both the AN and the LE with information about for instance new subscribers.

An Access Network AN is a system which is implemented between the Local Exchange LE and the user. The functions associated with the V5 interface or interfaces of an AN can be configured and operated flexibly via the management Q3 interface. An AN may for instance comprise multiplexing, cross-connect and transmission functions. The V5 interface is independent of the transmission media and used inside the AN and the LE. An AN may furthermore support services outside the scope of the standard.

The bearer channel means a 64 kbit/s time slot in the V5.1 interface allocated for a B-channel (Speach and Data Transmission channel) of an ISDN user port or a PCM (Pulse Code Modulation) encoded 64 kbit/s channel from a PSTN user port. A user port means a physical port implemented in the AN to provide the relevant interface functions towards the user. The user port is addressed by a logical address used in the relevant protocols on the V5 interface. The V5 interface is a general term for the family of V interfaces for connection of ANs to the LE, e.g. a V5.1 or a V5.2 interface.

The V5 interface is standardized by ETSI TC SPS3 and transfered to ITU-T. The V5 standard is defined such that every configuration of ports, channels and features are to be handled by the management Q3 interface, Q3_{AN} disclosed in ETS 300 376-1 and Q3_{LE} in ETS 300 377-1. This is expensive in the case where AN is a small unit.

Small Access Networks are implemented with only one 2048 kbit/s digital link while larger Access Networks have several links of that kind. Small ANs could use both the V5.1 and V5.2 inteface standard while larger ANs could use only V5.2.

### OBJECTS OF THE INVENTION

An object of the invention is to provide an arrangement, in which the existing standard is used but in a way to ease the managing of Access Networks, particularly small ones.

Another object of the invention is to provide an arrangement which have practically no affect on the standardized AN, LE and V5 protocols.

A solution to the objects of the invention is described in independent claims. Further features and developments of the invention are described in the dependent claims.

The invention relates to a method and an arrangement to establish a telecommunication through an interface (V5.1; V5.2) between an Access Network (AN) and a Local Access Network regarding a new subscriber to be connected to a user port in the Access Network, data regarding the new subscriber being provided from a standardized management Q3 interface.

According to the invention the data regarding the subscriber is only provided to either the AN or the LE, and that the other means of the two is adapted to be provided with the data transfered at an installation operation for the subscriber. Preferably, it is the LE which is provided with the data regarding the subscriber. The interface between the AN and the LE should be a V5 interface and amendments in the management procedure for the AN are provided such that procedure steps regarding the data transfered at said installation operation are jumped if the management procedure should be provided in a system having both the AN and the LE provided with said data from the management Q3 interface.

In this way the configuration and the standardized protocol in neither the AN nor the LE regarding trafic between them are affected once the transfer is done and the data is stored. Support in the protocol for not doing the standard features has been used while not affecting the standard.

### BRIEF DESCRIPTION OF THE DRAWINGS

The invention will in the following be further described in a non-limiting way under reference to the accompanying drawings in which:
- FIG 1: schematically indicates the V5 architecture as standardized by ETSI.
- FIG 2: schematically indicates the architecture according to the invention.
- FIG 3: shows a signalling diagram between the AN and the LE in accordance with the invention.
- FIG 4: shows a part of a flow chart with operations according to the invention inserted.
- FIG 5: illustrates the protocol in both the AN and the LE.
- FIG 6: shows a signalling diagram between the LE and the AN in accordance with a development of the invention.

### DETAILED DESCRIPTION OF THE INVENTION

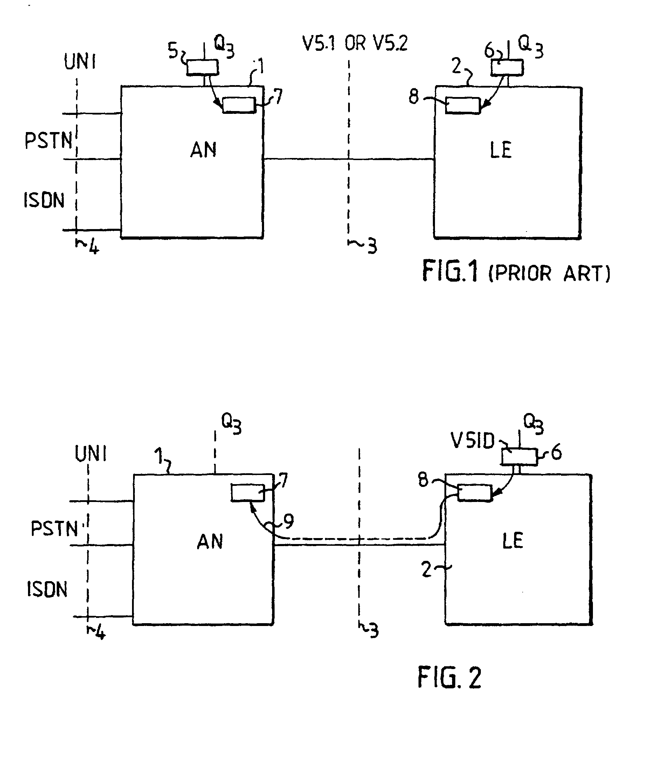

With reference to FIG 1, in which the prior art is illustrated, an Access Network (AN) 1 has a connection to a Local Exchange (LE) 2 through a standardized interface 3, for instance the ETSI standard interface V5.1 defined in ETS 300 324-1, or the ETSI standard interface V5.2 defined in ETS 300 347-1. The interface 3 comprises at least one 2048 kbit/s digital link for the multiplexing of up to thirty PSTN (Public Switched Telephone Network) or fifteen ISDN-BA (Integrated Services Digital Network - Basic Access) accesses represented by a number of allocated multiplexed time channels. Both the AN and the LE are connected to the standardized management Q3 interface. As schematically indicated to the left in FIG 1, a User Network Interface (UNI) 4 is connected between the AN and the user ports for users which could use both PSTN and ISDN.

When, according to the prior art, a new subscriber is introduced in the system at least identification data for the subscriber is provided into both the AN and the LE through the interface Q3, as schematically illustrated by the blocks 5 and 6 in FIG 1. The V5 interface (V5ID) is a unique number of a V5.1 interface and shall be a 24 bit number. This data is stored in stores 7 and 8, respecively. For protocols between the AN and the LE the identity of that particular subscriber use the identifications stored in the stores 7 and 8, as illustrated by arrows.

According to the invention, and illustrated in FIG 2, only the LE need be connected to the interface Q3. The AN could also be connected to the interface Q3, but then only for the purpose of checking and/or repairing or the like.

The V5 standard has a parameter V5ID, which is the important parameter to be discussed in relation to the invention. The communication is transfered between the AN and the LE in multiplexed time slots, called channels. The C-channel is a predetermined time slot, i.e. TS16, used for the purpose of controlling between the AN and the LE in V5. Then, there are thirty B-channels for communication transmission. The parameter V5ID is also used for connecting LE and/or AN to other features, such as:
* the relation between a subscriber and a time slot for a communication in the bearer channel between the AN and the LE through V5, which is connected to the corresponding subscriber line and physic port in AN to which the subscriber is connected.
* V5ID is a pre-requisite for the AN and the LE to be able to communicate with each other via the C-channel TS16 regarding communication set up for an installed curtomer.

Principally, the AN and the LE could be defined independently of each other. The V5ID and/or a variant of it, which for instance could be upgrading of software done at different instances, in both the AN and the LE are necessary in order to start the communication and to set up communication links using the C-channel TS16.

According to the invention data regarding new subscribers or other data to be shared by both the AN and LE is provided only to one of them, preferably the LE, which, when appropriate, transfers it via the interface 3 to the other one of them, as illustrated by the dashed arrow 9 from the store 8 to the store 7. In this way the configuration and the standardized protocol in neither the AN nor the LE regarding trafic between them are affected once the transfer is done and the identity is stored. Thus what is done is to use what has support in the protocol for not doing the standard features while not affecting the standard.

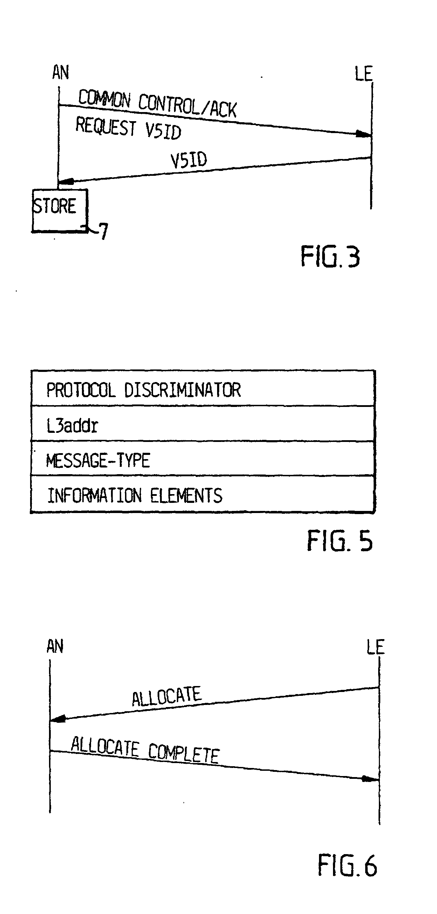

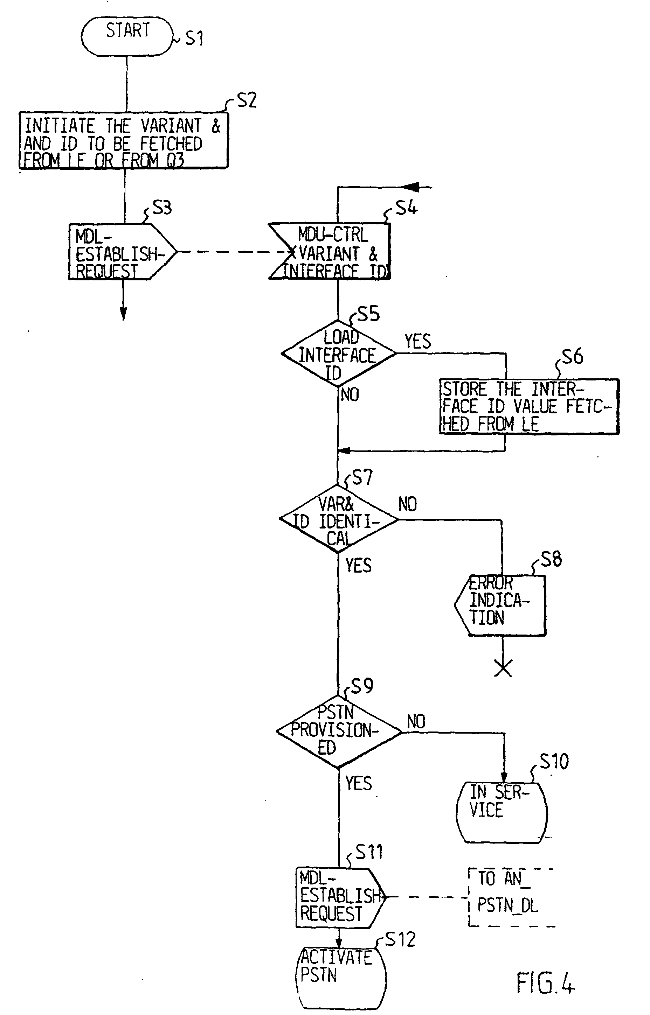

A set up is illustrated in the information flow diagram in FIG. 3. The subscriber station is physically connected to a user part in the AN via the interface UNI 3. The LE has got the identification of the subscriber and to which AN the subscriber station is connected through the interface Q3 and it is stored in the storage cell 8. Also, for the V5.1 standard, a channel is allocated to the subscraber station. At startup the AN sends a signal COMMON CONTROL/ACK to the LE with a request for identification of the subscriber. The LE sends the subscriber identification V5ID stored in the storage cell 8 to the requesting AN which stores it in its storage cell 7.

This is also illustrated in FIG 4 which shows a flow chart of the system startup interval and a part of the State ANl (SYS) of the process AN_SYSTEM_MANAGEMENT corresponding to the pages 217 and 218 in ETS 300 324-1:1994 but with some amendments done in accordance with the invention. Only the parts of the flow chart influenced by the invention are shown. Directly after start in S1 an initiation of the variant & interface ID to be fetched from LE or from Q3 is done in S2. The step S2 is an addition in accordance with the invention. It is designed such that both the prior art system and the system according to the invention could be served. Thus, the existing standard is not affected.

Thereafter, a MDL (Management of DL) establish request in S3 to AN control DL (primitive between layer 2 and layer 3) is done in accordance with the Standard ETS 300 324-1:1994. This request is transfered to step S4 in State AN1(SYS), of which a part is shown, together with an addition in accordance with the invention.

In accordance with the invention, a check is done in S5 if the storage 7 need be updated with the interface V5ID. If the answer is YES then, in step S6, store the V5ID value fetched from the LE and then proceed with the next step S7. If the answer is NO then proceed directly with the next step S7.

This addition will not affect the standard, because in that standard the V5ID should already have been stored from the interface Q3 and the answer in the step S5 would be NO.

Then the program will proceed according to the standard by checking if the stored V5ID are identical in the AN and the LE and to provide an error indication, in step S8, if they are not identical, and if they are identical to proceed to the step S9. A check is done whether PSTN is provisioned or not. If it is not provisioned then it is placed IN SERVICE in step S10. If it is provisioned then an MDL_ESTABLISH_REQUEST is done in step S11 and PSTN is activated in step S12.

In order to start traffic the LE will deblock the particular user port in the AN connected to the interface UNI in FIG 2 and pointed out by the L3addr, for both ISDN and PSTN, in the protocol for PORT CONTROL (ETS 300 324-1:1994, page 119, Table 50) provided for messages between the the AN and the LE and briefly illustrated in FIG 5. The protocol comprises briefly a protocol discriminator, an L3addr denoting addresses within layer 3 messages both for PSTN and Control protocols to interfaces to networks and users, the type of message sent, and information elements in the message.

An LE has to be flexible enough in order to be able to be connected to different kinds of Access Networks dependent upon use and architecture, such as fibre lines, electrically conductive lines, radio links, SDH, or ATM as transmission medium. Simplifications in the AN connection nodes could be provided by having as many of them as possible predefined.

A number of traffic parameters need be defined in order to provide the right kind of subscriber service. It is appropriate to do this at the installation. Thus, according to a development of the invention and illustrated in FIG 6, this could be done in the same way as the installation of the identification installation between the AN and the LE. After the identification is transfered from the storage 8 in the LE to the AN and stored in the storage 7 then the LE makes an ALLOCATE command including data about the subscriber to the AN which stores the data and sends back a communication ALLOCATE COMPLETE that the allocation is completed.

For V5.1, traffic parameters to be defined are for instance the B-channels in the interface 3 for transmission through the interface. The channels for the respective B-channels (UNI) shall be connected to a fixed B-channel through the interface 3. The exchange in the LE has the flexibility to connect an arbitrary user port (UP) of access type PSTN or ISDN to an optional bearer channel (time slot) and to be assigned an arbitrary address.

For V5.2, the LE does only know the logical address in order to provide the connection between a user B-channel and a bearer channel, and this is controlled by the Bearer Channel Connection (BCC) protocol in the V5.2 standard (ETS 300 347-1:1994).

Thus, firstly the interface is defined, and secondly the next operation is to define the channel in the interface which should have the signalling for the control protocol. ISDN and PSTN have different kinds of operations. Other kinds of operations attach the subscriber number to a particular time slot in the transmission through the interface, and then the L3-addr in the protocol is used.

As long as an AN node only has one type of access (ISDN or PSTN) then it is simple to define the channel relation and a logical address. However, in V5.1, when there is a mixture of both the access types in the same AN node, the addresses could need coordination to particular address areas. All this is appropriate to define at installation of a new subscriber.

## Claims

1. Method to establish a telecommunication opportunity through an interface (V5.1; V5.2) between an Access Network (AN) and a Local Exchange (LE) regarding a new subscriber to be connected to a user port in the Access Network, data regarding the new subscriber being provided from a standardized management Q3 interface, **characterized in that**
the data regarding the subscriber is only provided to either the AN or the LE, and that the remaining network (AN or LE) of the two is adapted to be provided with the data transfered at an installation operation for the subscriber.

2. Method according to claim 1, **characterized in that** it is the LE which is provided with the data regarding the subscriber.

3. Method according to claim 1 or 2, **characterized in that** the interface between the AN and the LE is a V5 interface and that amendments in the management procedure for the AN are provided such that procedure steps regarding the data transfered at said installation operation are jumped if the management procedure should be provided in a system having both the AN and the LE provided with said data from the management Q3 interface.

4. Method according to anyone of the preceding claims, **characterized in that** the data to be transfered comprise the subscriber identification data.

5. Method according to claim 4, **characterized in that** the data to be transfered also comprises a number of traffic parameters.

6. Arrangement to establish a telecommunication opportunity through an interface (V5.1; V5.2) between an Access Network (AN) and a Local Exchange (LE) regarding a new subscriber to be connected to a user port in the Access Network, data regarding the new subscriber being provided from a standardized management Q3 interface, **characterized by**
first kind of storage means (8) in either the AN or the LE to store data regarding the new subscriber and provided through the management Q3 interface,
means (3) to transfer the data to the remaining network (AN or LE) of the two at an installation operation for the subscriber, and
second kind of storage means (7) to store the transfered data there.

7. Arrangement according to claim 6, **characterized in that** the first kind of storage means (8) is provided in the LE.

8. Arrangement according to claim 6 or 7, **characterized in that** the interface between the AN and the LE is a V5 interface and that amendments in the management procedure for the AN are provided such that procedure steps regarding the data transfered at said installation operation are jumped if the management procedure should be provided in a system having both the AN and the LE provided with said data from the management Q3 interface.

9. Arrangement according to anyone of the claims 6 to 8, **characterized in that** the data to be transfered comprise the subscriber identification data.

10. Arrangement according to claim 9, **characterized in that** the data to be transfered also comprises a number of traffic parameters.

## Patentansprüche

1. Verfahren zum Einrichten einer Telekommunikations-Gelegenheit durch eine Schnittstelle (V5.1; V5.2) zwischen einem Teilnehmernetz (AN) und einer Teilnehmervermittlungsstelle (LE) hinsichtlich eines neuen Teilnehmers, welcher an einen Benutzeranschluss in dem Teilnehmernetz verbunden werden muss, wobei Daten bezüglich des neuen Teilnehmers von einer standardisierten Management-Q3-Schnittstelle bereitgestellt werden, **dadurch gekennzeichnet, dass** die Daten bezüglich des Teilnehmers lediglich zu entweder dem AN oder der LE zur Verfügung gestellt werden, und dass das restliche Netzwerk (AN oder LE) der beiden derart ausgelegt ist, um mit den Daten versorgt zu werden, die bei einer Installationsoperation für den Teilnehmer übertragen werden.

2. Verfahren gemäß Anspruch 1, **dadurch gekennzeichnet, dass** es der LE ist, welcher mit den Daten bezüglich des Teilnehmers versorgt wird.

3. Verfahren gemäß Anspruch 1 oder 2, **dadurch gekennzeichnet, dass** die Schnittstelle zwischen dem AN und der LE eine V5-Schnittstelle ist, und dass Änderungen in der Management-Prozedur für das AN derart bereitgestellt werden, dass die Prozedurschritte bezüglich der bei der Installationsoperation übertragenen Daten übersprungen werden, wenn die Management-Prozedur in einem System bereitgestellt werden soll, welches sowohl das AN als auch die LE mit den Daten von der Management-Q3 Schnittstelle versorgt hat.

4. Verfahren gemäß einem der vorhergehenden Ansprüche, **dadurch gekennzeichnet, dass** die zu übertragenen Daten die Teilnehmer-Identifizierungsdaten enthalten.

5. Verfahren gemäß Anspruch 4, **dadurch gekennzeichnet, dass** die zu übertragenen Daten auch eine Anzahl von Verkehrsparametern enthalten.

6. Anordnung zum Einrichten einer Telekommunikations-Gelegenheit durch eine Schnittstelle (V5.1; V5.2) zwischen einem Teilnehmernetz (AN) und einer Teilnehmervermittlungsstelle (LE) hinsichtlich eines neuen Teilnehmers, welcher an einen Benutzeranschluss in dem Teilnehmernetz verbunden werden muss, wobei Daten bezüglich des neuen Teilnehmers von einer standardisierten Management-Q3-Schnittstelle bereitgestellt werden, **gekennzeichnet durch**
eine erste Art von Speichereinrichtung (8) in entweder dem AN oder der LE zum Speichern von Daten bezüglich des neuen Teilnehmers und welche **durch** die Management-Q3-Schnittstelie zur Verfügung gestellt wird,
eine Einrichtung (3) zum Übertragen der Daten zu dem restlichen Netzwerk (AN oder LE) der beiden bei einer Installationsoperation für den Teilnehmer, und
eine zweite Art von Speichereinrichtung (7) zum Speichern der übertragenen Daten dort.

7. Anordnung gemäß Anspruch 6, **dadurch gekennzeichnet, dass** die erste Art der Speichereinrichtung (8) in der LE vorgesehen ist.

8. Anordnung gemäß Anspruch 6 oder 7, **dadurch gekennzeichnet, dass** die Schnittstelle zwischen dem AN und der LE eine V5-Schnittstelle ist, und dass Änderungen in der Management-Prozedur für das AN derart bereitgestellt werden, dass die Prozedurschritte bezüglich der bei der Installationsoperation übertragenen Daten übersprungen werden, wenn die Management-Prozedur in einem System bereitgestellt werden soll, welches sowohl das AN als auch die LE mit den Daten von der Management-Q3-Schnittstelle versorgt hat.

9. Anordnung gemäß einem der Ansprüche 6 bis 8, **dadurch gekennzeichnet, dass** die zu übertragenen Daten die Teilnehmer-Identifizierungsdaten enthalten.

10. Anordnung gemäß Anspruch 9, **dadurch gekennzeichnet, dass** die zu übertragenen Daten auch eine Anzahl von Verkehrsparametern enthalten.

## Revendications

1. Procédé pour établir une opportunité de télécommunication à travers une interface (V5.1 ; V5.2) entre un réseau d'accès (AN pour Access Network) et un central urbain (LE pour Local Exchange) concernant un nouvel abonné devant être connecté à un point de connexion d'utilisateur dans le réseau d'accès, des données concernant le nouvel abonné étant délivrées par une interface de gestion Q3 normalisée, **caractérisé en ce que** les données concernant l'abonné sont fournies seulement soit au réseau d'accès AN soit au central LE, et **en ce que** le réseau restant (AN ou LE) parmi les deux est adapté pour recevoir les données transférées lors d'une opération d'installation pour l'abonné.

2. Procédé selon la revendication 1, **caractérisé en ce que** c'est le central LE qui reçoit les données concernant l'abonné.

3. Procédé selon la revendication 1 ou 2, **caractérisé en ce que** l'interface entre le réseau d'accès AN et le central ,LE est une interface V5 et des modifications dans la procédure de gestion du réseau d'accès AN sont délivrées de telle sorte que les étapes de procédure concernant les données transférées pendant ladite opération d'installation sont sautées si la procédure de gestion doit être réalisée dans un système comportant à la fois le réseau AN et le central LE qui reçoivent lesdites données à partir de l'interface de gestion Q3.

4. Procédé selon l'une quelconque des revendications précédentes, **caractérisé en ce que** les données devant être transférées comprennent les données d'identification de l'abonné.

5. Procédé selon la revendication 4, **caractérisé en ce que** les données devant être transférées comprennent également un certain nombre de paramètres de trafic.

6. Agencement pour établir une opportunité de télécommunication à travers une interface (V5.1 ; V5.2) entre un réseau AN et un central urbain LE concernant un nouvel abonné devant être connecté à un point de connexion d'utilisateur dans le réseau d'accès, des données concernant le nouvel abonné étant délivrées par une interface de gestion Q3 normalisée, **caractérisé par** :
un premier type de moyens de mémorisation (8) soit dans le réseau AN, soit dans le central LE, pour mémoriser des données concernant le nouvel abonné et délivrées par l'intermédiaire de l'interface de gestion Q3,
un moyen (3) pour transférer les données au réseau restant (AN ou LE) parmi les deux lors d'une opération d'installation pour l'abonné, et
un second type de moyens de mémorisation (7) pour mémoriser les données transférées.

7. Agencement selon la revendication 6, **caractérisé en ce que**, le premier type de moyens de mémorisation (8) est disposé dans le central LE.

8. Agencement selon la revendication 6 ou 7, **caractérisé en ce que** l'interface entre le AN et le LE est une interface V5 et des modifications dans la procédure de gestion pour le AN sont réalisées de telle sorte que les étapes de procédure concernant les données transférées lors de ladite opération d'installation sont sautées si la procédure de gestion doit être réalisée dans un système comportant à la fois le AN et le LE pourvus desdites données à partir de l'interface de gestion Q3.

9. Agencement selon l'une quelconque des revendications 6 à 8, **caractérisé en ce que** les données devant être transférées comprennent les données d'identification de l'abonné.

10. Agencement selon la revendication 9, **caractérisé en ce que** les données devant être transférées comprennent également un certain nombre de paramètres de trafic.
